**Europäisches Patentamt**

**European Patent Office**

**Office européen des brevets**

(19)

(11) Veröffentlichungsnummer: **0 417 231 B1**

(12)

# EUROPÄISCHE PATENTSCHRIFT

(45) Veröffentlichungstag der Patentschrift: **01.06.94**

(51) Int. Cl.⁵: **H02P 9/30**, H02J 7/16

(21) Anmeldenummer: **90904752.4**

(22) Anmeldetag: **21.03.90**

(86) Internationale Anmeldenummer:
**PCT/DE90/00213**

(87) Internationale Veröffentlichungsnummer:
**WO 90/12449 (18.10.90 90/24)**

(54) **BORDNETZ.**

(30) Priorität: **01.04.89 DE 3910510**
**27.02.90 DE 4006114**

(43) Veröffentlichungstag der Anmeldung:
**20.03.91 Patentblatt 91/12**

(45) Bekanntmachung des Hinweises auf die
Patenterteilung:
**01.06.94 Patentblatt 94/22**

(84) Benannte Vertragsstaaten:
**DE ES FR GB IT**

(56) Entgegenhaltungen:
**EP-A- 179 985**
**WO-A-79/00878**
**DE-A- 3 142 878**
**US-A- 3 716 774**
**US-A- 4 335 344**

(73) Patentinhaber: **ROBERT BOSCH GMBH**
**Postfach 30 02 20**
**D-70442 Stuttgart(DE)**

(72) Erfinder: **CONZELMANN, Gerhard**
**Wilhelmstr. 37**
**D-7022 Leinfelden-Oberaichen(DE)**
Erfinder: **NAGEL, Karl**
**Grundstr. 24**
**D-7413 Gomaringen(DE)**
Erfinder: **JUNGER, Andreas**
**Gruobachstrasse 27**
**D-7410 Reutlingen 2(DE)**

**Beschreibung**

Stand der Technik

Die Erfindung betrifft ein Bordnetz nach der Gattung des Hauptanspruchs.

Die üblichen Einbau-Regler für Drehstromgeneratoren halten die Spannung an den Klemmen des Generators konstant. Für die Spannung des Bordnetzes sind aber die Klemmen der Batterie maßgebend. Der Spannungsabfall $U_R$ auf der Leitung darf bis zu 400 mV betragen. Soll auf die Batteriespannung geregelt werden, so ist eine zusätzliche Leitung von der Batterie zum Spannungsregler erforderlich, damit die Batteriespannung bestimmt werden kann.

In der US-PS 3 716 774 vorgeschlagen, den Spannungsabfall zwischen dem Generator und der Batterie zu kompensieren und dazu den Spannungsabfall an der Gleichrichterbrücke auszuwerten. Dieser Spannungsabfall ist vom fließenden Strom abhängig und bietet daher eine Möglichkeit, auch den Spannungsabfall zwischen Generator und Batterie zu bestimmen. Der Nachteil dieser Anordnung ist, daß ebenfalls eine zusätzliche Leitung erforderlich ist, die zwar nicht zur Batterie aber dafür zur Gleichrichterbrücke geht.

Vorteile der Erfindung

Das erfindungsgemäße Bordnetz mit den kennzeichnenden Merkmalen des Hauptanspruchs hat demgegenüber den Vorteil, daß die zusätzliche Leitung vollständig eingespart wird, da der auftretende Gleichspannungsabfall durch eine "Hilfsgröße" an den Generatorklemmen erfaßt und der Istwert der Generatorspannung durch einen Eingriff in den Regler wenigstens ein einer nullten Näherung um den so ermittelten selben Betrag angehoben wird.

Einerseits besitzt die Leitung vom Generator zur Batterie nicht nur einen Gleichstromwiderstand, sondern durch ihre Induktivität auch einen Wechselstromwiderstand. Beide sind proportional zur Länge der Leitung. Andererseits enthält der gleichgerichtete Drehstrom beziehungsweise Wechselstrom noch beachtliche Wechselstromanteile, die dem fließenden Gleichstrom proportinal sind. Da nun die Batterie einen hinreichenden Kurzschluß für die überlagerte Wechselstromkomponente darstellt, ist die an den Klemmen des Generators anstehende Wechselspannung proportional zur Leitungslänge und zum fließenden Gleichstrom.

Der besondere Vorteil des erfindungsgemäßen Bordnetzes besteht nun darin, daß diese Wechselspannungskomponente in einer Schaltung verarbeitet wird und zur Korrektur des vom Spannungsregler vorgegebenen Istwerts verwendet wird.

Zeichnung

Die Erfindung sei anhand der Figuren 1 bis 4 beschrieben. Figur 1 zeigt schematisch ein Bordnetz mit Drehstromgenerator, Gleichrichter, Regler, Batterie und der Verbindungsleitung mit den entsprechenden Größen, Figur 2 ein Blockschaltbild der Auswerteschaltung zur Korrektur des Istwerts. Im Blockschaltbild der Figur 3 ist dargestellt, wie sich der Aufwand für die Schaltung bei einem modernen Regler drastisch reduzieren läßt. Figur 4 zeigt ein Ausführungsbeispiel dazu.

Beschreibung der Erfindung

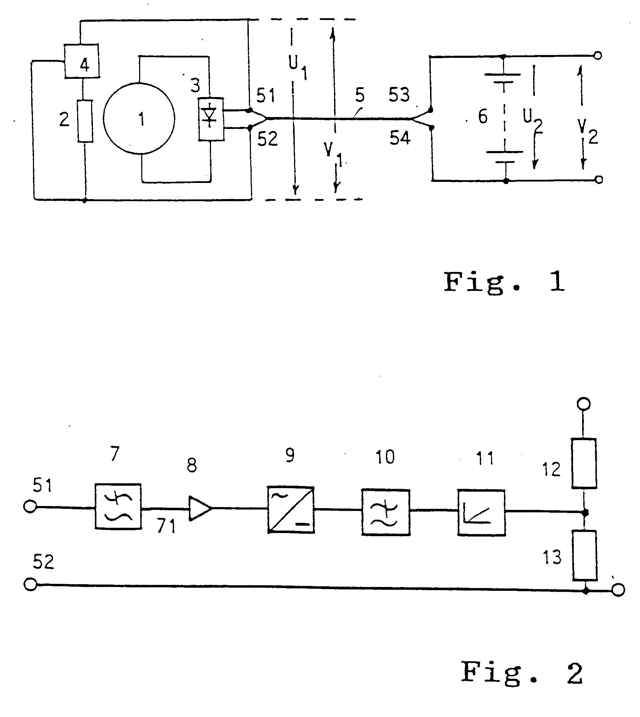

In Figur 1 ist 1 der Generator mit Erregerwicklung 2, Gleichrichter 3 und Spannungsregler 4. Seine positive Klemme ist mit 51, seine negative mit 52 bezeichnet. Die Leitung 5 verbindet den Generator mit der Batterie 6, deren positive Klemme mit 53 und deren negative Klemme mit 54 bezeichnet ist. $U_1$ ist die Gleichspannung an den Klemmen 51, 52 des Generators und $U_2$ die an den Klemmen der Batterie; entsprechend sind $V_1$ und $V_2$ die anstehenden Wechselspannungskomponenten.

Die Leitung besitzt einen Widerstandsbelag $K_R$ und einen Induktivitätsbelag $K_L$. Mit der Leitungslänge 1 ergibt sich der Gleichstromwiderstand R und die Induktivität L zu

$$(01) \quad R = K_R 1 \quad \text{und} \quad (11) \quad L = K_L 1.$$

Von den fließenden Strömen ist I der Gleichstrom-Anteil und i der Wechselstrom-Anteil. Damit werden unter der Voraussetzung $V_2 = 0$ die Spannungsabfälle auf der Leitung 5 und nur der Betrag der Wechselspannung mit der Kreisfrequenz $\omega$ interessant:

(02)   $\Delta U = U1-U2 = K_R \, 1 \, I$ und (12)   $\Delta V = |\omega \, K_L \, 1 \, i|$.

Beide Spannungsabfälle hängen somit proportional von Strom und Leitungslänge ab. $\Delta V$ ist allerdings noch von der Kreisfrequenz $\omega$ und damit von der Drehzahl abhängig. Diese Abhängigkeit läßt sich durch Integration mit einem RC-Glied, d. h. formal durch Multiplikation mit dem Operator $(\omega \, R \, C)^{-1}$ beseitigen. Damit wird die Ausgangsspannung des Integrators $\Delta V_i$:

(13)   $\Delta V_i = (R \, C)^{-1} \, K_L \, 1 \, i$.

Die Ausgangsspannung $\Delta V_i$ des Integrators ist somit ebenso wie $\Delta U$ porportional zu Leitungslänge und Gleichstrom und damit ihr Abbild.

Eine Schwäche dieser Anordnung besteht allerdings darin, daß der Widerstandsbelag $K_R$ umgekehrt proportional dem Quadrat des Drahtdurchmessers d ist, während der Induktivitätsbelag nur mit 1n a/d zurückgeht, also praktisch konstant bleibt. Da er jedoch auch noch von seiner Umgebung, also verlegungsabhängig ist, lassen sich leicht gewisse Korrekturen anbringen. Auch ein zusätzlicher ferromagnetischer Belag oder eine Ergänzung durch eine diskrete Induktivität ist geeignet. Aber auch schon ohne Korekturen ergibt sich ein deutlicher Vorteil, wie das folgende Beispiel zeigt:

Ist $I_o$ der Nennstrom des Generators, q der von der Stromdichte her zulässige Wert des Leiterquerschnitts, $\Delta U$ der bei einer Länge der Leitung von 5 m auftretende Gleichspannungsverlust und $\Delta u$ die Spannungskorrektur gemäß der Erfindung, dann ist der Fehler f bei gleicher Leitungsführung und nicht angepaßtem Korrekturglied:

| I/A | q/mm$^2$ | dU/mV | du/mV | f/mV |
|-----|----------|-------|-------|------|
| 150 | 35 | 400 | 400 | 0 |
| 50 | 10 | 455 | 155 | 300. |

Damit liegt man aber auch bei der Anlage mit $I_o$ = 50 A wieder unter dem zulässigen Wert von 400 mV. Eine andere Möglichkeit besteht darin, die Korrekturen innerhalb der Schaltung des Korrekturglieds mit bekannten Mitteln veränderbar auszuführen, und zwar entweder beim Waferproben auf dem Chip oder aber nachträglich am fertigen Produkt.

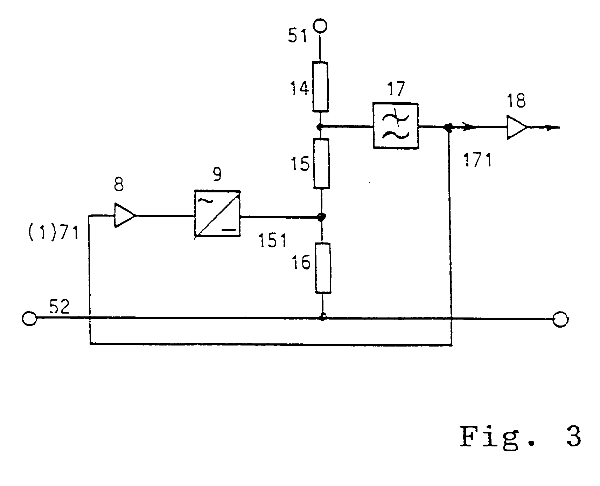

In Figur 2 ist 7 der als Tiefpaß ausgeführte Integrator, 8 ein Verstärker, 9 ein Gleichrichter, 10 wiederum ein Tiefpaß und 11 ein Funktionsgenerator. Ferner sind 12 und 13 Widerstände, die Bestandteile des Spannungsreglers 4 sind und den Eingriff zur Spannungskorrektur symbolisieren.

Die an den Klemmen 51, 52 abgegriffene Wechselspannungskomponente wird mittels des Tiefpasses 7 integriert, so daß ihre Ausgangsspannung 71 frequenz- und somit auch drehzahlunabhängig ist. Letztere wird, falls erforderlich, mittels des Verstärkers 8 verstärkt und im Gleichrichter 9 gleichgerichtet und entweder direkt oder über einen weiteren Tiefpaß 10 und einen Funktionsgenerator 11 dem Spannungsregler zugeführt. Die Anordnung kann je nach Bedarf eine Ausgangsspannung oder einen Ausgangsstrom liefern. Die Korrekturgröße kann dabei auf der Istwertseite oder auf der Referenzspannungsseite des Spannungsreglers eingreifen. Entsprechend ist ihre Polarität zu wählen. Der Funktionsgenerator ermöglicht weitere Korrekturen. So kann damit die stets vorhandene kürzeste Leitung und der an ihr entstehende Spannungsabfall unterdrückt, die maximal mögliche Korrektur nicht nur begrenzt, sondern bei zu großer Wellenspannung an den Klemmen 51, 52, die auf einen Leitungsbruch, eine defekte Batterie oder dgl. hinweisen, auch wieder zurückgenommen werden. Schaltungstechnisch läßt sich der Funktionsgenerator besonders vorteilhaft mit dem Gleichrichter kombinieren.

Spannungsregler, die den heutigen Anforderungen gerecht werden, bsitzen an ihrem Eingang bereits einen Tiefpaß bzw. eine als Tiefpaß wirkende elektronische Schaltung zum Glätten der extrem hohen Wellenspannung bei Anlagen für große Ströme. Ein weiteres Merkmal der Erfindung sieht vor, diesen Tiefpaß einmal als Integrator 7 zum Erzeugen der drehzahlunabhängigen Spannung $V_i$ zu verwenden, zum anderen aber auch als Tiefpaß 10 zu nutzen.

In Figur 3 sind mit 14, 15 und 16 Widerstände des Spannungsteilers am Eingang des an die Klemmen 51, 52 angeschlossenen Spannungsreglers bezeichnet, 17 ist sein Tiefpaß und 18 der nachgeschaltete Verstärker. Der Ausgang 171 dieses Tiefpasses ist auch mit dem Eingang 71 des Verstärkers 8 der Korrekturschaltung verbunden. Der Gleichrichter liefert einen Wellenstrom, der hier beispielhaft am Verbindungspunkt 151 der Widerstände 15, 16 eingreift und den Istwert in Bezug auf den Spannungsregler mit zunehmendem Generatorstrom erniedrigt, so daß das Potential der Klemme 51 um denselben Betrag ansteigt. Die vom Wellenstrom 151 des Gleichrichters am Spannungsteiler erzeugte Wellenspannung

3

durchläuft den Tiefpaß ebenfalls, wird also geglättet, bevor sie auf den Verstärkereingang 18 trifft. Die Mehrfachausnutzung des Tiefpasses 17 ist zulässig, da für eine Korrektur die Schleifenverstärkung kv stets hinreichend klein gegen 1 ist.

In einem weiteren Schritt läßt sich auch noch der dem Tiefpaß 17 des Spannungsreglers nachgeschaltete Verstärker als Verstärker 8 mit benutzen. Durch diese Maßnahme schrumpft der Aufwand für das ganze Korrekturglied auf den Gleichrichter 9 zusammen. Der Gleichrichter selbst wird vorteilhaft als Vollweggleichrichter ausgeführt, da dann die Wellenspannung an seinem Ausgang hauptsächlich die doppelte Frequenz aufweist.

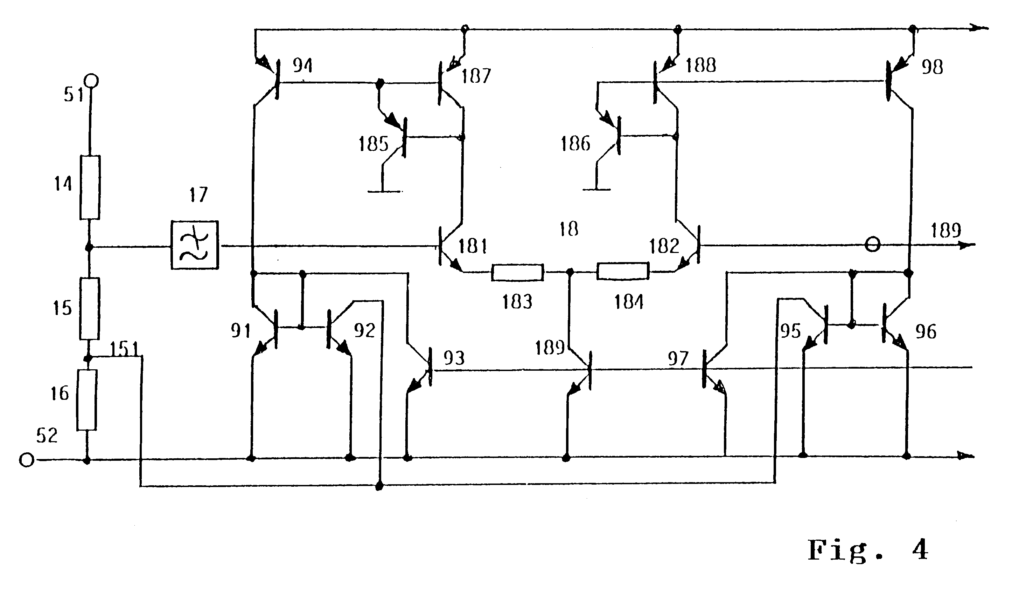

Figur 4 zeigt die Schaltung eines Ausführungsbeispiels für ein Korrekturglied gemäß der Erfindung und seine Realisierung in einem Spannungsregler. Nur noch die Elemente 9n mit n = 1 bis 8 des Vollweggleichrichters sind übriggeblieben. Alle anderen Komponenten sind Bestandteil der Schaltung des Spannungsreglers. Es bilden 14, 15 und 16 den bereits bekannten Spannungsteiler, 17 ist wieder der Tiefpaß. Der Operationsverstärker 18 besteht aus den Transistoren 181 und 182 als Differenzpaar, den Widerständen 183, 184 in den Emittern als Strom-Gegenkopplung zur Erweiterung des Aussteuerbereichs und den der Auskopplung dienenden Tranistoren 185, 187 und 186, 188. Die Auskopplung für den Spannungsregler selbst ist nicht mehr dargestellt, um die Übersichtlichkeit zu wahren. Die beiden Eingänge des Operationsverstärkers, also die Basen der Transistoren 181, 182, liegen einerseits am Ausgang des Tiefpasses 17, andererseits an der Referenzspannung 189. Für das Korrekturglied bilden der PNP-Transistor 94 zusammen mit den Transistoren des Verstärkers 185, 187 und der PNP-Transistor 98 mit den Transistoren 186, 188 je einen Stromspiegel, dessen Strom jeweils nochmals in dem NPN-Transistor-Paar 91, 92 bzw. 95, 96 gespiegelt wird. Die beiden Ausgänge der NPN-Stromspiegel, also die Kollektoren der Transistoren 92, 95, sind zusammengefaßt und an den Verbindungspunkt 151 angeschlossen. Sie liefern also den Strom für die Korrektur. Die NPN-Transistoren 93 und 97 sind Bestandteil einer Strombank des Reglers. Ihr Kollektorstrom zieht sich vom Kollektorstrom der Transistoren 94 bzw. 98 ab. Werden bei der Differenzspannung "0" am Eingang des Verstärkers 18 die Kollektorströme der Transistoren 93, 94 bzw. 97, 98 durch die Dimensionierung der Schaltung gleich eingestellt, so ist der Kollektorstrom des Transistors 92 bzw. 95 Null, es erfolgt keine Korrektur. Durch die Symmetrie der linken Transistorgruppe 91 bis 94 mit der rechten 95 bis 98 entsteht der Effekt eines Vollweggleichrichters. Mit zunehmender Restwelligkeit, also mit steigendem Generatorstrom, steigt der Kollektorstrom der Transistoren 92, 95 an, die Korrektur setzt ein.

Soll die Korrektur verzögert, also bei einem von Null verschiedenen Generatorstrom, einsetzen, so sind die Kollektorströme der Transistoren 93, 97 höher einzustellen. Der Gleichrichter erhält damit die Eigenschaft eines einfachen Funktionsgenerators. Die Dimensionierung der Schaltung bleibt dem Fachmann überlassen. So sind die Stromteilerverhältnisse, die bei den NPN-Transistoren durch die Zahl der Emitter und bei den PNP-Transistoren durch die Zahl der Kollektoren bestimmt sind, nicht eingezeichnet.

Einbauregler haben den Nachteil, daß der Spannungsregler normalerweise auf die Klemmenspannung des Generators regelt und nicht auf die Spannung der Batterie. Die Erfindung ermöglicht bei Reglern, die zur Verbesserung der Regeleigenschaften bereits ein Eingangsfilter aufweisen, mit minimalem Mehraufwand an integrierten Komponenten wenigstens eine Kompensation des Spannungsabfalls auf der Leitung vom Generator zur Batterie in "nullter Näherung". Es lassen sich somit in etwa Eigenschaften erreichen, die heute nur mit Batterie-Sensing, also einer zusätzlichen Leitung vom Regler zur Batterie, zu erhalten sind. Wird das Bordnetz mit einbezogen, läßt sich praktisch auch eine Vollkompensation erreichen.

**Patentansprüche**

1. Bordnetz, insbesondere für Kraftfahrzeuge, mit einer Batterie (6) und einem Wechsel- oder Drehstromgenerator (1) mit nachgeschaltetem Gleichrichter (3), dessen Spannung durch ein- und ausschalten des Feldstromes des Generators (1) mittels eines Spannungsreglers (4) begrenzt wird, der den Istwert der Spannung an den Klemmen des Generators (1) erfaßt und im Erregerfeld des Generators (1) einen mittleren Feldstrom erzeugt, so daß die Spannung des Bordnetzes unabhängig von der Last und der Drehzahl in etwa konstant bleibt, mit Schaltungsmitteln, die den auf der Leitung von Generator (1) zur Batterie (6) durch den Laststrom entstehenden unerwünschten Gleichspannungsabfall an den Klemmen (51, 52) des Generators (1) mittels einer Hilfsgröße erfassen und mindestens näherungsweise kompensieren, dadurch gekennzeichnet, daß die durch den im gleichgerichteten Wechsel- oder Drehstrom enthaltene, dem Gleichstrom proportionale Wechselstromkomponente in der etwa der Leitungslänge (1) proportionalen Induktivität (L) der Leitung (5) vom Generator (1) zur Batterie (6) erzeugte und an den Klemmen (51, 52) des Generators (1) verfügbare Wechselspannung als Hilfsgröße durch Schaltungsmittel zur Kompensation des Gleichspannungsabfalls auf der Leitung (5) vom Generator (1) zur Batterie (6) verwendet ist.

**2.** Bordnetz nach Anspruch 1, dadurch gekennzeichnet daß die strom- und frequenz- bzw. drehzahlproportionale Wechselspannung mittels eines Integrators (7) in eine weitgehend frequenz- bzw. drehzahlunabhängige Wechselspannung umgewandelt ist.

**3.** Bordnetz nach Anspruch 2, dadurch gekennzeichnet, daß der Integrator (7) durch eine als Tiefpaß wirkende Siebschaltung ausgeführt ist.

**4.** Bordnetz nach Anspruch 3, dadurch gekennzeichnet, daß ein dem Spannungsregler (4) zur Glättung der Wellenspannung vorgeschalteter Tiefpaß als Integrator mit verwendet ist.

**5.** Bordnetz nach einem der vorhergehenden Ansprüche, dadurch gekennzeichnet, daß die am Ausgang des Integrators (7) entstehende Wechselspannung gleichgerichtet ist.

**6.** Bordnetz nach Anspruch 5, dadurch gekennzeichnet, daß der Gleichrichter (9) ein Vollweg-Gleichrichter ist.

**7.** Bordnetz nach einem der Ansprüche 5 und 6, gekennzeichnet durch eine zwischen Integrator (7) und Gleichrichter (9) geschaltete Anordnung (8) zum Verstärken des Wechselspannungssignals.

**8.** Bordnetz nach einem der vorhergehenden Ansprüche, dadurch gekennzeichnet, daß die Ausgangsgleichspannung bzw. der Ausgangsgleichstrom des Gleichrichters (9) zur Korrektur der Istspannung des Generators (1) verwendet ist.

**9.** Bordnetz nach einem der vorhergehenden Ansprüche, dadurch gekennzeichnet, daß die Ausgangsgleichspannung bzw. der Ausgangsgleichstrom des Gleichrichters (9) nach dem Passieren einer als Tiefpaß wirkenden Siebschaltung zur Korrektur der Istpannung des Generators(1) verwendet ist.

**10.** Bordnetz nach einem der vorhergehenden Ansprüche, dadurch gekennzeichnet, daß die Ausgangsspannung des Gleichrichters (9) als Korrekturgröße so gepolt dem Istwert der Generatorspannung direkt überlagert ist, daß mit zunehmender Spannung der Korrekturgröße, also mit zunehmendem Generatorstrom, dem Schaltungsteil des Spannungsreglers (4) zum Konstanthalten der Generatorspannung ein kleinerer Istwert der Generatorspannung erscheint, wodurch die Generatorspannung in etwa um den Gleichspannungsabfall auf der Leitung (5) zwischen Generator (1) und Batterie (6) angehoben wird.

**11.** Bordnetz nach einem der vorhergehenden Ansprüche, dadurch gekennzeichnet, daß in der zwischen den Generatorklemmen (51, 52) und dem Ausgang des Korrekturglieds liegenden Schaltung ein Funktionsgenerator geschaltet ist, der einen nichtlinearen Zusammenhang zwischen Generatorstrom und Ausgangsspannung bzw. Ausgangsstrom des Korrekturglieds herstellt.

**12.** Bordnetz nach einem der vorhergehenden Ansprüche, dadurch gekennzeichnet, daß mindestens eine Schaltungskomponente des Korrekturglieds zum Programmieren der Korrekturfunktion auf verschiedene Generator- und/oder Fahrzeugtypen veränderbar ist.

**13.** Bordnetz nach einem der vorhergehenden Ansprüche, dadurch gekennzeichnet, daß der Induktivitätsbelag der Leitung (5) vom Generator (1) zur Batterie (6) ihrem Gleichstromwiderstand und/oder dem Nennstrom des Generators (1) angepaßt ist.

**14.** Bordnetz nach Anspruch 13, dadurch gekennzeichnet, daß der Induktivitätsbelag der Leitung (5) vom Generator (1) zur Batterie (6) durch mindestens teilweises Armieren der Leitung mit einem ferromagnetischen Belag angepaßt ist.

**15.** Bordnetz nach Anspruch 14, dadurch gekennzeichnet, daß der Induktivitätsbelag der Leitung (5) vom Generator (1) zur Batterie (6) durch Verändern des Abstands der Leitung (5) gegen ferromagnetische Teile des Fahrzeugs angepaßt ist.

**16.** Bordnetz nach einem der vorhergehenden Ansprüche, dadurch gekennzeichnet, daß die zur optimalen Kompensation des Spannungsabfalls auf der Leitung (5) vom Generator (1) zur Batterie (6) erforderliche Gesamtinduktivität durch die Leitungsinduktivität und ein konzentriertes Ergänzungselement erzeugt ist.

**17.** Bordnetz nach einem der vorhergehenden Ansprüche, dadurch gekennzeichnet, daß die Schaltung des Korrekturglieds monolithisch integriert ist.

**18.** Bordnetz nach einem der vorhergehenden Ansprüche, dadurch gekennzeichnet, daß die Schaltung des Korrekturglieds zusammen mit der Steuerstufe des Generatorreglers monolithisch integriert ist.

**19.** Bordnetz nach einem der vorhergehenden Ansprüche, dadurch gekennzeichnet, daß die Schaltung des Korrekturglieds zusammen mit dem Generatorregler monolithisch integriert ist.

**Claims**

**1.** Vehicle electrical system, in particular for motor vehicles, having a battery (6) and an alternating or rotary current generator (1) with a rectifier (3) which is connected downstream and whose voltage is limited by switching on and off the field current of the generator (1) by means of a voltage regulator (4) which detects the actual value of the voltage at the terminals of the generator (1) and produces an average field current in the exciter field of the generator (1) so that the voltage of the vehicle electrical system remains approximately constant irrespective of the load and of the rpm, having switching means which detect, by means of an auxiliary parameter, the undesired direct voltage drop at the terminals (51, 52) of the generator (1), which is produced on the line from generator (1) to the battery (6) as a result of the load current, and at least approximately compensate the said drop, characterized in that the alternating voltage which is contained in the rectified alternating or rotary current, and is produced the alternating current component which is proportional to the direct current in the inductor (R), which is approximately proportional to the line length (1), of the line (5) from the generator (1) to the battery (6) and is available at the terminals (51, 52) of the generator (1) is used as auxiliary parameter by switching means for compensation of the direct voltage drop on the line (5) from the generator (1) to the battery (6).

**2.** Vehicle electrical system according to Claim 1, characterized in that the alternating voltage which is proportional to the current and frequency or rpm is converted by means of an integrator (7) into an alternating voltage which is largely independent of frequency or rpm.

**3.** Vehicle electrical system according to Claim 2, characterized in that the integrator (7) is realized by means of a filter which acts as a lowpass filter.

**4.** Vehicle electrical system according to Claim 3, characterized in that a lowpass filter which is connected upstream of the voltage regulator (4) for smoothing the wave voltage is also used as an integrator.

**5.** Vehicle electrical system according to one of the preceding claims, characterized in that the alternating voltage which is produced at the output of the integrator (7) is rectified.

**6.** Vehicle electrical system according to Claim 5, characterized in that the rectifier (9) is a full-wave rectifier.

**7.** Vehicle electrical system according to one of Claims 5 and 6, characterized by an arrangement (8) which is connected between integrator (7) and rectifier (9) for the purpose of amplifying the alternating voltage signal.

**8.** Vehicle electrical system according to one of the preceding claims, characterized in that the direct output voltage or the direct output current of the rectifier (9) is used to correct the actual voltage of the generator (1).

**9.** Vehicle electrical system according to one of the preceding claims, characterized in that the direct output voltage or the direct output current of the rectifier (9) is used, after passing through a filter network acting as lowpass filter, to correct the actual voltage of the generator (1).

**10.** Vehicle electrical system according to one of the preceding claims, characterized in that the output voltage of the rectifier (9) is directly superimposed on the actual value of the generator voltage as a correction parameter having been poled in such a way that, as the voltage of the correction parameter increases, that is, as the generator current increases, a smaller actual value of the generator voltage is apparent to the circuit component of the voltage regulator (4) for keeping constant the generator voltage, as a result of which the generator voltage is raised approximately by the direct voltage drop on the line (5) between generator (1) and battery (6).

**11.** Vehicle electrical system according to one of the preceding claims, characterized in that a function generator which produces a non-linear relation between generator current and output voltage or output current of the correction element, is connected in the circuit located between the generator terminals (51, 52) and the output of the correction element.

**12.** Vehicle electrical system according to one of the preceding claims, characterized in that at least one circuit component of the correction element can be varied in order to programme the correction function to various generator and/or vehicle types.

**13.** Vehicle electrical system according to one of the preceding claims, characterized in that the inductance per unit length of the line (5) from the generator (1) to the battery (6) is adapted to its direct current resistance and/or the rated current of the generator (1).

**14.** Vehicle electrical system according to Claim 13, characterized in that the inductance per unit length of the line (5) from the generator (1) to the battery (6) is adapted by at least partially armouring the line with a ferromagnetic coating.

**15.** Vehicle electrical system according to Claim 14, characterized in that the inductance per unit length of the line (5) from the generator (1) to the battery (6) is adapted by varying the distance of the line (5) from ferromagnetic parts of the vehicle.

**16.** Vehicle electrical system according to the preceding claims, characterized in that the overall inductance which is required for optimum compensation of the voltage drop on the line (5) from the generator (1) to the battery (6) is produced by the line inductance and a concentrated complementary element.

**17.** Vehicle electrical system according to one of the preceding claims, characterized in that the circuit of the correction element is monolithically integrated.

**18.** Vehicle electrical system according to one of the preceding claims, characterized in that the circuit of the correction element is monolithically integrated together with the control stage of the generator controller.

**19.** Vehicle electrical system according to one of the preceding claims, characterized in that the circuit of the correction element is monolithically integrated together with the generator controller.

**Revendications**

**1.** Réseau d'alimentation de bord, notamment pour véhicules automobiles, avec une batterie (6) et un générateur de courant alternatif ou triphasé (1) avec un redresseur (3) branché à la suite, dont la tension est limitée par enclenchement et déclenchement du courant d'inducteur du générateur (1) par un régulateur de tension (4) qui détecte la valeur réelle de la tension aux bornes du générateur (1) et produit, dans le champ d'excitation du générateur (1), un courant inducteur moyen, de sorte que la tension du réseau d'alimentation de bord reste à peu près constante, indépendamment de la charge et de la vitesse de rotation, avec des moyens de branchement qui détectent au moyen d'une valeur auxiliaire et compensent au moins approximativement la chute indésirable de la tension continue aux bornes (51, 52) du générateur (1), cette chute de tension étant provoquée par le courant de charge sur la liaison entre le générateur (1) et la batterie (6), réseau d'alimentation de bord caractérisé en ce que la tension alternative, disponible aux bornes (51, 52) du générateur et produite dans l'inductance (L) à peu près proportionnellement à la longueur (1) de la liaison (5) entre le générateur (1) et la batterie (6) par la composante alternative, proportionnelle au courant continu, contenue dans le courant alternatif ou triphasé redressé, est utilisée comme grandeur auxiliaire par des moyens de branchement pour la compensation de la chute de la tension continue sur la liaison (5) entre le générateur (1) et la batterie (6).

2. Réseau d'alimentation de bord selon la revendication 1, caractérisé en ce que la tension alternative proportionnelle au courant et à la fréquence ou à la vitesse de rotation, est convertie par un intégrateur (7) en une tension alternative dépendant dans une large mesure de la fréquence ou de la vitesse de rotation.

3. Réseau d'alimentation de bord selon la revendication 2, caractérisé en ce que l'intégrateur (7) est réalisé par un circuit de filtrage fonctionnant en filtre passe-bas.

4. Réseau d'alimentation de bord selon la revendication 3, caractérisé en ce qu'un filtre passe-bas branché en amont du régulateur de tension (4) pour le lissage de la tension ondulée, est aussi utilisé comme intégrateur.

5. Réseau d'alimentation de bord selon une des précédentes revendications, caractérisé en ce que la tension alternative présente à la sortie de l'intégrateur (7) est redressée.

6. Réseau d'alimentation de bord selon la revendication 5, caractérisé en ce que le redresseur (9) est un redresseur à pleine onde.

7. Réseau d'alimentation de bord selon une des revendications 5 et 6, caractérisé par un dispositif (8) branché entre l'intégrateur (7) et le redresseur (9) pour amplifier le signal de tension alternative.

8. Réseau d'alimentation de bord selon une des précédentes revendications, caractérisé en ce que la tension continue de sortie ou le courant continu de sortie du redresseur (9) sont utilisés pour corriger la tension réelle du générateur (1).

9. Réseau d'alimentation de bord selon une des précédentes revendications, caractérisé en ce que la tension continue de sortie ou le courant continu de sortie du redresseur (9) sont utilisés pour la correction de la tension réelle du générateur (1) après avoir traversé un circuit de filtrage agissant en filtre passe-bas.

10. Réseau d'alimentation de bord selon une des précédentes revendications, caractérisé en ce que la tension de sortie du redresseur (9) est directement superposée à la valeur réelle de la tension du générateur tout en étant polarisée, de façon que lorsque la tension de la grandeur de correction croît et donc avec un courant de générateur croissant, une valeur réelle plus petite de la tension du générateur apparaisse à la partie de branchement du régulateur de tension (4) pour maintenir constante la tension du générateur, grâce à quoi la tension du générateur est augmentée à peu près de la chute de tension continue sur la liaison (5) entre le générateur (1) et la batterie (6).

11. Réseau d'alimentation de bord selon une des précédentes revendications, caractérisé en ce que dans le branchement situé entre les bornes (51, 52) du générateur et la sortie de l'organe de correction, est branché un générateur de fonction qui établit une corrélation non linéaire entre le courant du générateur et la tension de sortie ou le courant de sortie de l'organe de correction.

12. Réseau d'alimentation de bord selon une des précédentes revendications, caractérisé en ce qu'au moins une composante du circuit de l'organe de correction est susceptible d'être modifiée pour la programmation de la fonction de correction sur différents types de générateurs et/ou de véhicules.

13. Réseau d'alimentation de bord selon une des précédentes revendications, caractérisé en ce que la couche d'inductance de la liaison (5) entre le générateur (1) et la batterie (6) est adaptée à sa résistance ohmique et/ou au courant nominal du générateur (1).

14. Réseau d'alimentation de bord selon la revendication 13, caractérisé en ce que la couche d'inductance de la liaison (5) entre le générateur (1) et la batterie (6) est adaptée par une armature au moins partielle de la liaison avec une couche ferromagnétique.

**15.** Réseau d'alimentation de bord selon la revendication 14, caractérisé en ce que la couche d'inductance de la liaison (5) entre le générateur (1) et la batterie (6) est adaptée par modification de la distance de la liaison (5) par rapport aux parties ferromagnétiques du véhicule.

**16.** Réseau d'alimentation de bord selon une des précédentes revendications, caractérisé en ce que l'inductance totale nécessaire pour la compensation optimale de la chute de tension sur la liaison (5) entre le générateur (1) et la batterie (6) est obtenue par l'inductance de la liaison et un élément de complément concentré.

**17.** Réseau d'alimentation de bord selon une des précédentes revendications, caractérisé en ce que le câblage de l'organe de correction est intégré monolithiquement.

**18.** Réseau d'alimentation de bord selon une des précédentes revendications, caractérisé en ce que le câblage de l'organe de correction est intégré monolithiquement conjointement avec l'étage de commande du régulateur du générateur.

**19.** Réseau d'alimentation de bord selon une des précédentes revendications, caractérisé en ce que le câblage de l'organe de correction est intégré monolithiquement, conjointement avec le régulateur du générateur.

Fig. 1

Fig. 2

Fig. 3

Fig. 4

EP 0 417 231 B1